# EUROPEAN PATENT APPLICATION

(11) **EP 4 131 255 A1**
(43) Date of publication of application: **08.02.2023**
(21) Application number: 20927687.2
(22) Date of filing: 18.05.2020
(51) Int. Cl.: G10L 15/26

(54) **METHOD AND APPARATUS FOR DECODING VOICE DATA, COMPUTER DEVICE AND STORAGE MEDIUM**

(30) Priority: 27.03.2020 CN 202010232034
(71) Applicant: Jingdong Technology Holding Co., Ltd., Beijing 100176 (CN)
(72) Inventor: LI, Siqi, Beijing 100176 (CN); ZI, Libo, Beijing 100176 (CN)
(74) Representative: karo IP
(86) International application number: PCT/CN2020/090788
(87) International publication number: WO 2021/189624

(57) **Abstract**

The present disclosure relates to a method, an apparatus, a computer device and a storage medium for decoding speech data. The method comprises acquiring at least one transcribed text obtained by transcribing the speech data (S201); acquiring score of each transcribed text (S202); acquiring at least one preset hot word corresponding to the speech data (S203), each preset hot word corresponds to a reward value; and calculating, when there is a string matched with the preset hot word in the transcribed text, a target score of the transcribed text (S204) according to the reward value of the matched string and the score of the transcribed text, where the target score is used to determine the decoded text of the speech data. Hot word matching is performed on the transcribed text. If there is a matching hot word, the score of the transcribed text will be increased. The accuracy of decoding is improved without updating the model, and the operation is simple.

## Description

This application claims priority to Chinese Patent Application No. 202010232034.9, entitled "METHOD, APPARATUS, COMPUTER DEVICE AND STORAGE MEDIUM FOR DECODING SPEECH DATA" and filed with China National Intellectual Property Administration on March 27, 2020, all contents of which are incorporated herein by reference.

### TECHNICAL FIELD

The present application relates to the field of computer technology, and in particular relates to a method, an apparatus, a computer device and a storage medium for decoding speech data.

### BACKGROUND

The decoding method based on prefix tree search is often suitable for speech recognition systems that train the acoustic model in an end-to-end manner; the acoustic model obtained by training the speech features predicts the probability that each frame of audio is all different characters; based on the probability matrix, select some characters with higher probability at each time step, add them to the path of the candidate result, score the candidate path in combination with the language model, select only a limited number of N candidate results with higher scores at each time step, and then continue to score based on these candidate paths at the next time step, and repeating the cycle until the last time step, to obtain N results with higher scores corresponding to the entire speech, and the result with the highest score is taken as the final result.

For some specific business scenarios, there are often some specific frequently occurring words (here called "hot words"). In the process of training the acoustic model, the corpus with hot words often appears less frequently, and the probability of the hot word in the probability distribution, when used for inference, given by the trained acoustic model is insufficient; in another aspect, in the training of the language model, there is also a problem that the frequency of hot words in the training text is low and the hot words cannot be given enough probability; therefore, the path with hot words cannot obtain enough probability and enough scores during decoding, so that it is usually not possible to decode to obtain satisfactory results.

If you want to improve the effect of decoding hot words, the usual practice is, on one hand, to start with the acoustic model, add enough corpus with hot words to the training set, and continue to iterate based on the original acoustic model (that is, transfer learning); on the other hand, to start with the language model, add enough corpus with hot words to the original training text, so as to improve the score given by the language model to the hot words, and retrain the language model. However, both methods require expanding the dataset, continuing or retraining the model, which increases the development cycle of the model.

### SUMMARY

In order to solve or at least partially solve the above technical problems, the present application provides a method and an apparatus for dynamically adding consensus nodes in a blockchain.

In a first aspect, this application provides a method for decoding speech data, including:
acquiring at least one transcribed text obtained by transcribing the speech data;
acquiring score of each transcribed text;
acquiring at least one preset hot word corresponding to the speech data, each preset hot word corresponds to a reward value; and
calculating, when there is a string matched with the preset hot word in the transcribed text, a target score of the transcribed text according to the reward value of the matched string and the score of the transcribed text, where the target score is used to determine the decoded text of the speech data.

In a second aspect, this application provides an apparatus for decoding speech data, including:
a transcribed text acquisition module, configured to acquire at least one transcribed text obtained by transcribing the speech data;
a score acquisition module, configured to acquire score of each transcribed text;
a hot word acquisition module, configured to acquire at least one preset hot word corresponding to the speech data, each preset hot word corresponds to a reward value; and
a score updating module, configured to calculate, when there is a string matched with the preset hot word in the transcribed text, a target score of the transcribed text according to the reward value of the matched string and the score of the transcribed text.

A computer device includes a memory, a processor and a computer program stored on the memory and executable on the processor, the processor is configured to implement, when executing the computer programs, the following steps:
acquiring at least one transcribed text obtained by transcribing the speech data;
acquiring score of each transcribed text;
acquiring at least one preset hot word corresponding to the speech data, each preset hot word corresponds to a reward value; and
calculating, when there is a string matched with the preset hot word in the transcribed text, a target score of the transcribed text according to the reward value of the matched string and the score of the transcribed text, where the target score is used to determine the decoded text of the speech data.

A computer-readable storage medium stores a computer program, the computer program, when executed by a processor, implements the following steps:
acquiring at least one transcribed text obtained by transcribing the speech data;
acquiring score of each transcribed text;
acquiring at least one preset hot word corresponding to the speech data, each preset hot word corresponds to a reward value; and
calculating, when there is a string matched with the preset hot word in the transcribed text, a target score of the transcribed text according to the reward value of the matched string and the score of the transcribed text, where the target score is used to determine the decoded text of the speech data.

In the above-mentioned method, the apparatus, the computer device and the storage medium for decoding speech data, the method includes: acquiring at least one transcribed text obtained by transcribing the speech data; acquiring score of each transcribed text; acquiring at least one preset hot word corresponding to the speech data, each preset hot word corresponds to a reward value; and calculating, when there is a string matched with the preset hot word in the transcribed text, a target score of the transcribed text according to the reward value of the matched string and the score of the transcribed text, where the target score is used to determine the decoded text of the speech data. Hot word matching is performed on the transcribed text. If there is a matching hot word, the score of the transcribed text will be increased. The accuracy of decoding is improved without updating the model, and the operation is simple.

### BRIEF DESCRIPTION OF THE DRAWINGS

The accompanying drawings herein are incorporated into the specification and constitute a part of the specification, show embodiments that conform to the disclosure, and are used together with the specification to explain the principle of the disclosure.

In order to more clearly describe the technical solutions in the embodiments of the present application, the accompanying drawings that need to be used in the description of the embodiments will be briefly introduced in the following. It is apparent to those persons of ordinary skill in the art that other drawings can be obtained based on these drawings without paying creative work.
FIG. 1 is an application environment diagram of a method for decoding speech data according to an embodiment of the disclosure.
FIG. 2 is a schematic flowchart of a method for decoding speech data according to an embodiment of the disclosure.
FIG. 3 is a schematic flowchart of a method for decoding speech data according to a specific embodiment of the disclosure.
FIG. 4 is a schematic diagram of the probability distribution obtained by calculating the acoustic model according to an embodiment of the disclosure.
FIG. 5 is a schematic diagram of the data structure of the prefix tree according to an embodiment of the disclosure.
FIG. 6 is a schematic diagram of the working principle of the prefix tree search decoder according to an embodiment of the disclosure.
FIG. 7 is a schematic diagram of the candidate path and the score of the path in speech frame, according to an embodiment of the disclosure.
FIG. 8 is a schematic flowchart of the decoding process of a hot word matching algorithm according to an embodiment of this disclosure.
FIG. 9 is a schematic diagram of the matching process of a hot word matching algorithm according to an embodiment of the disclosure.
FIG. 10 is a block diagram of the structure of an apparatus for decoding speech data according to an embodiment of the disclosure.
FIG. 11 is a schematic diagram of the internal structure of a computer device according to an embodiment of the disclosure.

### DETAILED DESCRIPTION OF THE EMBODIMENTS

In order to make the purpose, technical solutions and advantages of the embodiments of the present application clearer, the technical solutions in the embodiments of the present application will be described clearly and completely below in combination with the accompanying drawings in the embodiments of the present application. Obviously, the described embodiments are a part of but not all of the embodiments of the present application. Based on the embodiments in the present application, all other embodiments obtained by those persons of ordinary skill in the art without paying creative work shall fall within the protection scope of this disclosure.

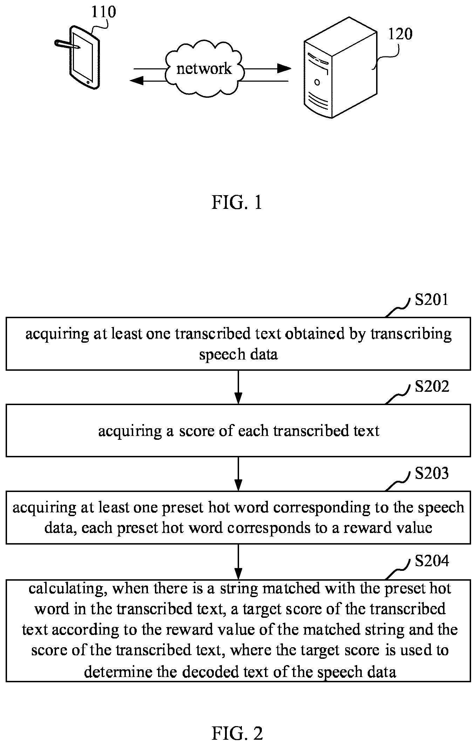

FIG. 1 is an application environment diagram of a method for decoding speech data according to an embodiment of the disclosure. Referring to FIG. 1, the method for decoding speech data is applied to a system for decoding speech data. The system for decoding speech data includes a terminal 110 and a server 120. The terminal 110 and the server 120 are connected through a network. The terminal 110 or the server 120 acquires at least one transcribed text obtained by transcribing the speech data; acquires the score of each transcribed text; acquires at least one preset hot word corresponding to the speech data, each preset hot word corresponds to a reward value; calculating, when there is a string matched with the preset hot word in the transcribed text, a target score of the transcribed text according to the reward value of the matched string and the score of the transcribed text, where the target score is used to determine the decoded text of the speech data.

The terminal 110 may specifically be a desktop terminal or a mobile terminal, and the mobile terminal may specifically be at least one of a mobile phone, a tablet computer, a notebook computer, and the like. The server 120 can be implemented by an independent server or a server cluster composed of multiple servers.

As shown in FIG. 2, in an embodiment, a method for decoding speech data is provided. The embodiment is mainly described in an exemplary way by applying the method to the terminal 110 (or the server 120) in FIG. 1 as above. Referring to FIG. 2, the method for decoding speech data specifically includes the following steps.

Step S201, acquiring at least one transcribed text obtained by transcribing the speech data.

Step S202, acquiring the score of each transcribed text is.

Step S203, acquiring at least one preset hot word corresponding to the speech data.

In this specific embodiment, each preset hot word corresponds to a reward value.

Step S204, calculating, when there is a string matched with the preset hot word in the transcribed text, a target score of the transcribed text according to the reward value of the matched string and the score of the transcribed text, where the target score is used to determine the decoded text of the speech data.

In this specific embodiment, the target score is used to determine the decoded text of the speech data.

Specifically, the speech data refers to the speech data collected by the speech collection device, and the speech data contains text information. After the speech data is recognized by the prefix tree recognition algorithm, the texts of multiple paths obtained are transcribed texts. The prefix tree recognition algorithm includes the recognition of the acoustic model and the recognition of the language model. Multiple transcribed texts can be identified in a same piece of speech, the score of each transcribed text is calculated, and the target transcribed text corresponding to the piece of speech data is determined according to the score of each transcribed text. The calculation of the score of transcription is a common score calculation method, such as calculating a product of the probability of the transcription in the acoustic model and the probability in the speech model, a product of the power exponent of the two probabilities after weighting coefficient, or a product of the product of the two probabilities and the path length.

Preset hot words refer to pre-configured hot words, and hot words refer to words that appear frequently in specific business scenarios. Different hot words can be configured for different business scenarios. A piece of speech may correspond to one or more preset hot words, and each preset hot word corresponds to a reward value. The reward value corresponding to each preset hot word can be the same or different, and the reward value corresponding to each preset hot word can be customized according to users' needs. The reward value is used to increase the score of the transcribed text. Specifically, how to increase the score of the transcribed text can be customized, such as by adding, multiplying, exponential and other mathematical operations to increase the score. If the reward value is a score, the reward value can be directly added to the score of the transcribed text to obtain the target score; if the reward value is a weighting coefficient, the weighting coefficient is used to weight the score of the transcribed text, to obtain the target score. According to the target score of each transcribed text, the transcribed text with the highest score is selected as the decoded text of the speech data, that is, the final recognition result of the speech.

In an embodiment, when a transcribed text contains multiple preset hot words, the reward value of each preset hot word is used to increase the score of the transcribed text. When a same preset hot word therein appears multiple times, the reward rules can be customized. If the reward value is only increased once for one same preset hot word, a corresponding reward value can also be increased each time it appears, and the number of times for the preset number of times the reward value is increased can also be limited, and so on.

The above method for decoding speech data includes: acquiring at least one transcribed text obtained by transcribing the speech data; acquiring score of each transcribed text; acquiring at least one preset hot word corresponding to the speech data, each preset hot word corresponds to a reward value; and when there is a string matched with the preset hot word in the transcribed text, calculating a target score of the transcribed text according to the reward value of the matched string and the score of the transcribed text, where the target score is used to determine the decoded text of the speech data. Hot word matching is performed on the transcribed text. If there is a matching hot word, the score of the transcribed text will be increased. The accuracy of decoding is improved without updating the model, and the operation is simple.

In an embodiment, step S204 includes: calculating the product of the reward value of the matched string and the score of the transcribed text to obtain the target score of the transcribed text.

Specifically, the reward value is a weighting coefficient, and the weighting coefficient is a value greater than 1. The product of the weighting coefficient and the score of the transcribed text is calculated to obtain the target score. Since the weighting coefficient is greater than 1, the target score can be increased. The calculation is simple by directly multiplying the weighting coefficient greater than 1 to increase the score, and the score in the transcribed text containing the preset hot words can be effectively improved, which can better adapt to the speech recognition of specific scenarios, and improve the recognition accuracy of specific scenarios.

In an embodiment, the above-mentioned method for decoding speech data further includes:
Step S301, intercepting, when current length of the transcribed text is greater than or equal to the length of the preset hot word, a string of the same length as the length of the preset hot word backward from the last character corresponding to the current length of the transcribed text, to obtain a string to be matched.
Step S302, using, when the string to be matched matches the preset hot word, the string to be matched as the matched string of the transcribed text.

Specifically, the current length refers to the length corresponding to the current characters in the transcribed text. For example, if the string is a string of which the Chinese pronunciation means "how to buy easy year insurance" and the current character is a character of which the Chinese pronunciation means "buy", the corresponding current length is 4. If the current character is a character of which the Chinese pronunciation means "insurance", the current length is 8. If the preset hot word is a word of which the Chinese pronunciation means "easy year insurance", when the current length is 4, 4 characters are intercepted backward from the character of which the Chinese pronunciation means "buy", and the obtained string to be matched is a string of which the Chinese pronunciation means "how to buy". Matching the string to be matched with the preset hot words, when they are completely matched, that is, each character is correspondingly the same, the string to be matched is used as the matched string. A matching method can be adopted, when matching, that the strings are matched one by one from backward to forward. When the current string does not match, the matching is stopped, and it can be judged that the character to be matched does not match the preset hot word without any need for matching subsequent characters.

In an embodiment, the above-mentioned method for decoding speech data further includes: using, when the transcribed text does not contain a preset hot word, the score of the transcribed text as the target score of the transcribed text.

Specifically, if no string matching each preset hot word is detected in the transcribed text, the score obtained by the previous score calculation method is directly used as the target score. For transcribed texts that do not contain preset hot words, the score is not increased, and the score of transcribed texts containing preset hot words is improved, thereby improving the recognition accuracy.

In an embodiment, the above-mentioned method for decoding speech data further includes:
Step S401, acquiring the probability of each transcription text in the acoustic model, to obtain a first probability.
Step S402, acquiring the probability of each transcribed text in the language model to obtain a second probability.
Step S403, calculating the product of the first probability and the second probability of each transcribed text to obtain the score of each transcribed text.

Specifically, the acoustic model and the language model may be customized models, or may be common acoustic models and speech models. The probability in the acoustic model refers to the probability that the text is recognized as the text by the acoustic model, that is, the first probability. The probability in the language model refers to the probability that the text is recognized as the text by the acoustic model, that is, the second probability. Calculate the product of the two probabilities and use the product as the score of the transcribed text. The product of the probabilities of the transcribed text in the two models is used as the score of the transcribed text, and the calculation is simple and convenient. In an embodiment, the above-mentioned method for decoding speech data further includes:
Step S404, acquiring a weighting coefficient of a speech model.
Step S405, updating, by using the weighting coefficient of the speech model as a power exponent, each second probability, to obtain a third probability of each transcribed text.

In this specific embodiment, step S403 includes: calculating the product of the first probability and the third probability of each transcribed text to obtain the score of the transcribed text.

Specifically, the weighting coefficient of the speech model is a coefficient for weighting the probability of the speech model, and the weighting coefficient is a power exponent of the second probability. The second probability is updated by using the power exponent, to obtain the third probability, and the product of the third probability and the corresponding first probability is used as the score of the transcribed text. The weighting coefficient can be customized.

In an embodiment, the above-mentioned method for decoding speech data further includes:
Step S406, acquiring a path length of each transcribed text.

In this specific embodiment, step S403 includes: calculating the product of the first probability and the second probability of each transcribed text and the path length of the transcribed text to obtain the score of the transcribed text.

Specifically, the path length of the transcribed text refers to the character length of the transcribed text, and the character length increases by 1 for each character being added. The product of the three values, the first probability, the second probability and the path length of the transcribed text, is calculated to obtain the score of the transcribed text. The second probability may be replaced with the third probability obtained by updating the weighting coefficient.

In an embodiment, the above-mentioned method for decoding speech data further includes:
Step S407, acquiring a preset penalty weighting coefficient.
Step S408, updating the path length, by using the preset penalty weight as the power exponent, to obtain the updated path length.

In this specific embodiment, step S403 includes: calculating the product of the first probability and the second probability of each transcribed text and the updated path length of the transcribed text, to obtain the score of the transcribed text.

Specifically, the preset penalty weighting coefficient is a coefficient for reducing the score. The influence on path length is reduced by presetting a penalty weighting coefficient on the path length. That is, the preset penalty weighting coefficient is used as the power exponent of the path length, the path length is updated, to obtain the updated path length. The product of the first probability and the second probability of each transcribed text and the updated path length of the transcribed text is calculated to obtain the score of the transcribed text. The second probability may be replaced with the third probability obtained by updating the weighting coefficient.

In a specific embodiment, a method for decoding speech data includes:
An end-to-end speech recognition system, which mainly consists of three parts, the acoustic model, the language model and the decoder.

Before the acoustic model is trained, the input for training the acoustic model needs to be obtained, that is, the speech waveform undergoes certain preprocessing (such as removing the silence at the head and tail of the audio), and then the process of extracting frequency domain features is gradually performed, and the original waveform of the speech signal is framed and windowed into small pieces of audio, that is, the original speech frame. The original speech frame is subjected to fast Fourier transform, and then after being subjected to the Mel filter and logarithm calculation, data located in the first 80 dimensions is taken as the input for training the acoustic model, that is, the 80-dimensional Fbank feature.

The training process of the acoustic model is to send the features obtained in the feature extraction stage into a designed acoustic neural network model for training until the model converges, to obtain the final acoustic model. The modeling unit of the acoustic model is at the character level, the input of the network model is the Fbank feature at the frame level, and the output is the probability of the character label at the frame level. The training process of the acoustic model, such as model training, needs to go through two processes. One is the forward process, that is, the probability distribution of the inferred output labels is obtained by calculating the input features and network parameters. The other is the reverse process, comparing the inferred output labels with the real labels to calculate the "distance" (referred to as the loss function, specifically the CTC loss function), the goal of model training is to minimize the loss function, and calculate the gradient of the network model accordingly, that is, to obtain directions and values of the network parameters of the updated model. The are repeatedly iterated until the value of the loss function no longer decreases. At this time, the model converges and a trained acoustic model is obtained.

The language model is generated by the statistical language model training tool using the processed corpus, and the language model is used to calculate the probability that a sequence of words forms a sentence.

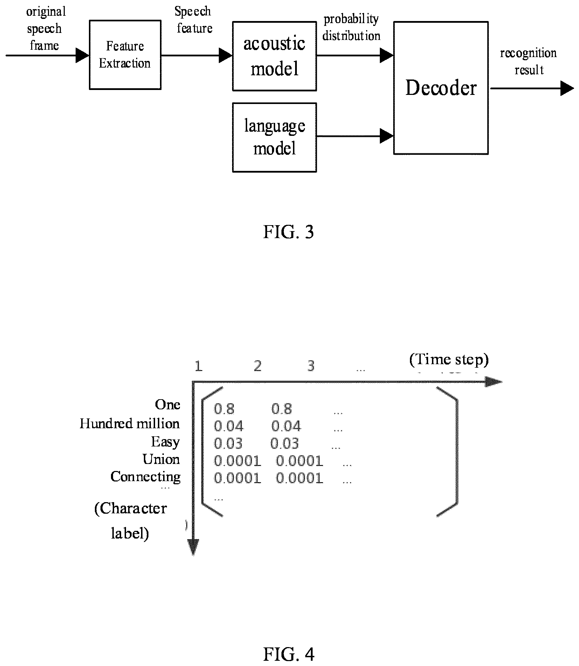

In the decoding stage, the acoustic model and the language model obtained in the above two processes are used in combination with the decoder to decode the speech to be recognized to obtain the recognition result. Referring to FIG. 3, the process of recognizing a speech is to subject the speech to be recognized to feature extraction, and input it into the acoustic model to calculate the probability distribution of the character label the speech at the frame level, and give this probability distribution together with the statistical language model to the decoder, the decoder is responsible for giving the possible decoding paths for each time step according to the frame-level character probability given by the acoustic model, and then combining the syntax scores given by the statistical language model to score all possible decoding paths, and the highest score is selected, to obtain. the final decoded result.

### Prefix tree search decoding method

There are two inputs to the decoder: the first one is the probability distribution obtained by calculating the original speech and the acoustic model. The specific form of the probability distribution is a two-dimensional matrix, as shown in FIG. 4, the two dimensions of the matrix are the number of time frames and the number of label types, each label on each time frame has its corresponding probability value; the second one is the language model, inputting the sequence of characters, the language model can give the probability/score of the sequence of characters.

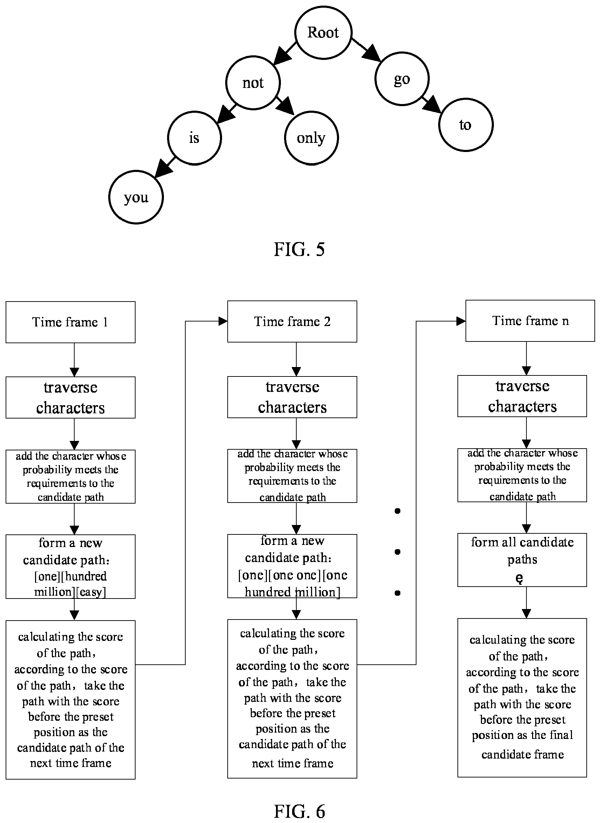

The data structure of the prefix tree is the basis of the prefix tree search decoder. A prefix tree is a data structure that can be used to store strings, and it may store in a compressed way, representing prefixes/paths with the same header by using the same root path, which saves space and facilitates prefix search. For example, there are words such as 'not is', 'not only', 'go', 'go to', and 'not you'. These words use the data structure of the prefix tree as shown in FIG. 5. It can be seen that, for the words with the same head, the tree will be forked only when different characters appear, and the same characters in front of the words can be combined into one path for storage, which also facilitates the search for prefixes and reduces the path search time. For example, searching for words starting with "not" no longer needs to traverse the entire list, but the search starts from the root of the tree.

The working principle of the prefix tree search decoder is shown in FIG. 6. First, on the first time frame, the initial candidate path is an empty string ("*Φ*" indicates an empty string), and the vector on the first time frame on the probability matrix is taken, that is, the probability of all character labels on the first time frame, and then traverse each character to judge the probability of the character. When the probability meets certain requirements, the character is added to the tail of the candidate path (the characters of which the probability does not meet the requirements will not participate in the formation of a new path), to form a new path, and then combine the language model and the word insertion penalty to score the path, sort the scores from small to large, and take the path with the score before the preset position as a new candidate path, which is used as the candidate path of the next time frame, and the second time frame also performs the same process above, and the obtained new candidate path is given to the next time frame; so continuously traverse the time frame until the last time step, to get the path where the final score is located at the preset position. Then the path with the highest score is the final result.

The score calculation of the path involves the calculation of the language model and the word insertion penalty term. The following formula is the score calculation formula of the path; where net represents the acoustic model, X represents the speech feature inputted into the acoustic model, W represents the transcribed text, and P represents the probability of the acoustic model, then the first product term represents the probability that the acoustic model outputs W when X is inputted; lm represents the language model, α represents the weight of the language model, then the second product term represents the score given by the language model; length(W) represents the path length, β is the weight of the word insertion penalty term, to consist the score of which the third product term is the word insertion penalty term; the total path score is the multiplication of the three, that is, Score = Pₙₑₜ(W , X)Pₗₘ(W)^{α}|leng(W)|^{β}.

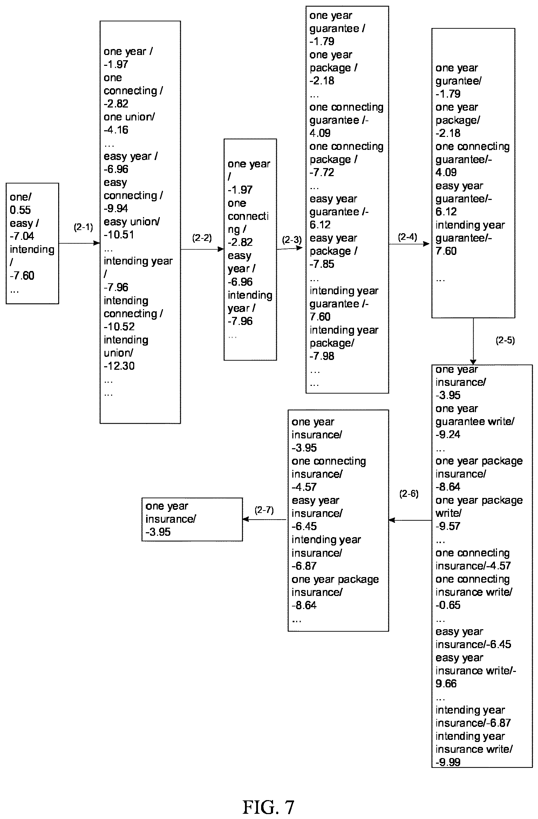

FIG. 7 shows the candidate paths and the scores of the paths of an audio which are obtained in each time frame. Each row in the block diagram is a path, separated by "/", and the following value is the score corresponding to the path, that is, on the basis of the candidate path of a previous time step, add the first few characters with higher probability on the time step to the end of the path, and calculate the score corresponding to the new path after adding the new character; take the first 200 results with the highest score, as the candidate paths for the next time step. Adding new characters, calculating the score of the new path, and taking 200 results with the highest score of until the final time step is performed repeatedly in the subsequent process, to obtain the highest score, which is the final result.

### Hot word decoding method based on prefix tree search

The main body of the decoding process of the hot word decoding method based on prefix tree search is as described above. In particular, a hot word matching algorithm is added in the decoding process to improve the score of hot words in path scoring.

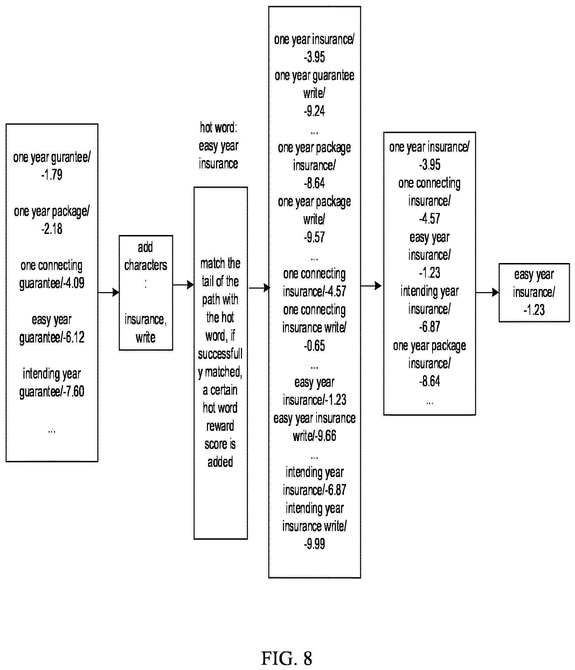

FIG. 8 is a schematic diagram of the effect of the decoding process when adding a hot word matching algorithm. The hot word decoding method based on the prefix tree adds the step of hot word matching in the process of traversing the candidate path at each time step, that is, matching the tail of the new path formed after adding the new character to the candidate path with the specified list of hot words. At a certain time step, the candidate path is: 200 candidate paths of which the Chinese pronunciation means such as "one year guarantee", "one year package", "one connecting guarantee", "easy year guarantee", all characters whose probability meets certain requirements in this time step are added to these candidate paths, to form new paths, for example, "one year guarantee" is extended into paths of which the Chinese pronunciation means "one year insurance", "one year package write", and each new path will be scored at the same time the path is formed, a reward value γ of hot word matching is added here; then **Score***_{hotword}* = Pₙₑₜ(W , X)Pₗₘ(W)^{α}|leng(W)| ^{β}γ.

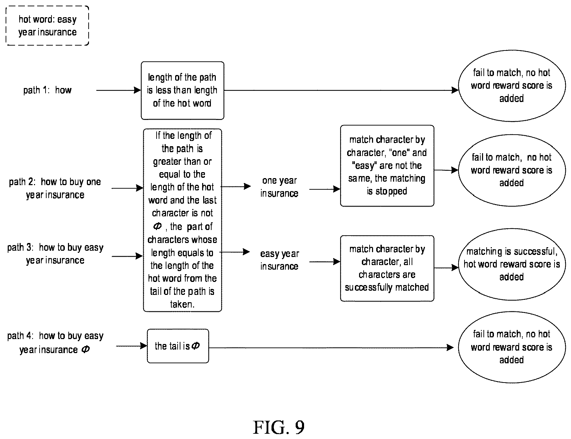

The specific hot word matching algorithm is: for each path, traversing all preset hot words, and comparing the tail of the path of which the preset hot word has a corresponding length with the preset hot word. If the string length of the path is less than the length of the hot word, the matching is skipped directly; at the same time, the case where the newly added character is blank is excluded from the scope of comparing hot words, which avoids repeatedly adding hot word rewards for paths with hot words. As shown in FIG. 9, if the preset hot word is a word of which the Chinese pronunciation means "easy year insurance", the character length is 4; some time steps in front of a piece of audio often form a short path.

For example, in path 1, the length of the string of which the Chinese pronunciation means "How" is 2, which is less than the length of the hot word to be matched, which is 4, so it is skipped directly and there is no hot word reward; until the length of the path is greater than or equal to the length of the hot word, then the hot word matching is performed; for example, in path 2, the character with a tail length of 4 taken from a string of which the Chinese pronunciation means "how to buy one year insurance" is "one year insurance", match "one year insurance" with "easy year insurance" character by character, once there is a character being not the same, the comparing is stopped, "one" and "easy" are not the same, so this path fails to match the hot word, and there is no hot word reward score; in path 3 the character with a tail length of 4 taken from the string of which the Chinese pronunciation means "how to buy easy year insurance" is "easy year insurance", match "easy year insurance" with "easy year insurance" character by character, when all characters are successfully matched, a certain hot word reward score is added for the path, so that the path with hot words will be more likely to appear in the front ranks with higher scores; in addition, if, in a special case, the newly added character is a blank (represented by *Φ*), such as path 4, it will be skipped directly, so that the hot word reward will not be repeatedly added for the same path. FIG. 9 shows the matching process of a single hot word. When a list of multiple hot words is given, each time the path score is calculated, each hot word is traversed in turn, and the tail of the path is matched with the hot word. The matching process of each hot word is the same as the matching process of a single hot word.

In this way, it is possible to customize hot words in the decoding process, and give the decoding path with the hot word a higher score by the method of hot word matching, so that the path with the hot word are more likely to appear in the decoding result. Regarding the setting of the specific value of the hot word reward, first set a series of experimental values in larger granularity, use the speech in this scenario to perform test of the recognition accuracy, and the two experimental values with the highest accuracy are taken as new experimental values. Then, in this interval, a series of experimental values of hot word rewards is made in a smaller granularity, and the test of the recognition accuracy is performed. The experimental value corresponding to the highest accuracy is taken as the final hot word reward.

In the decoding phase of speech recognition, for a specific application scenario, one or more specific hot words that frequently appear in this scenario can be formulated, and a reasonable hot word reward can be specified, so that when traversing all candidate paths in the decoding process, if a hot word occurs, the path is given a certain hot word reward, so that the hot word can appear in the final result. This method only needs to use the basic acoustic model and language model trained on large scale data sets, without need for collecting new scenario corpus, performing transfer learning on the acoustic model also does not need adding hot word texts to retrain the language model; this method is beneficial to the generalized use of the base model, which enables the basic model to be flexibly applied to various new scenarios, and relatively accurate recognition results that fit the scenario can still be obtained.

FIG. 2 is a schematic flowchart of a method for decoding speech data according to an embodiment of the disclosure. It should be understood that although the various steps in the flowchart of FIG. 2 are shown in sequence according to the arrows, these steps are not necessarily executed in the sequence shown by the arrows. Unless explicitly stated herein, the execution of these steps is not strictly limited to the sequence, and these steps may be performed in other sequence. Moreover, at least a part of the steps in FIG. 2 may include multiple sub-steps or multiple stages. These sub-steps or stages are not necessarily executed and completed at the same time, but may be executed at different times. The sequence of the execution of these sub-steps or stages is also not necessarily sequential, but may be performed in turn or alternately with at least a portion of other steps or sub-steps or phases of other steps.

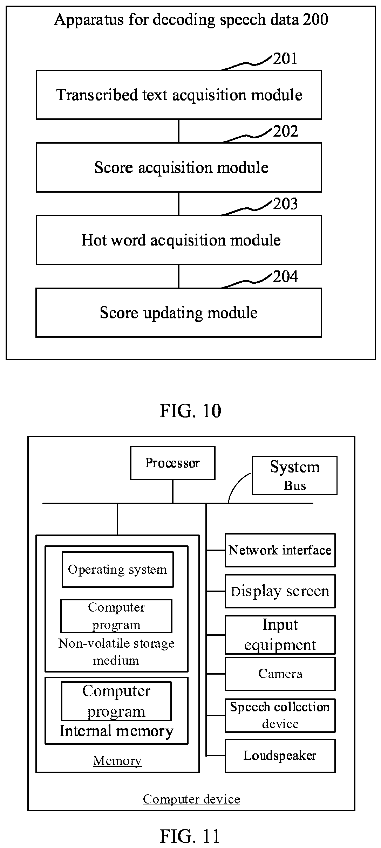

In an embodiment, as shown in FIG. 10, an apparatus for decoding speech data 200 is provided, including:
A transcribed text acquisition module 201, configured to acquire at least one transcribed text obtained by transcribing the speech data.

A score acquisition module 202, configured to acquire score of each transcribed text;
A hot word acquisition module 203, configured to acquire at least one preset hot word corresponding to the speech data, each preset hot word corresponds to a reward value; and
A score updating module 204, configured to calculate, when there is a string matched with the preset hot word in the transcribed text, a target score of the transcribed text according to the reward value of the matched string and the score of the transcribed text, where the target score is used to determine the decoded text of the speech data.

In an embodiment, the score updating module 204 is specifically configured to calculate the product of the reward value of the matched string and the score of the transcribed text to obtain the target score of the transcribed text.

In an embodiment, the above-mentioned apparatus for decoding speech data 200 further includes:
A hot word matching module, configured to intercept, when current length of the transcribed text is greater than or equal to the length of the preset hot word, a string of the same length as the length of the preset hot word backward from the last character corresponding to the current length of the transcribed text, to obtain a string to be matched; and use, when the string to be matched matches the preset hot word, the string to be matched as the matched string of the transcribed text.

In an embodiment, the score updating module 204 is further configured to use the score as the target score of the transcribed text.

In an embodiment, the above-mentioned apparatus for decoding speech data 200 further includes:
A score calculation module, configured to, acquire the probability of each transcription text in the acoustic model, to obtain a first probability, acquire the probability of each transcribed text in the language model to obtain a second probability, and calculate the product of the first probability and the second probability of each transcribed text to obtain the score of each transcribed text.

In an embodiment, the score calculation module is further configured to, acquire a weighting coefficient of a speech model, update, by using the weighting coefficient of the speech model as a power exponent, each second probability, to obtain a third probability of each transcribed text, and calculate the product of the first probability and the third probability of each transcribed text to obtain the score of the transcribed text.

In an embodiment, the score calculation module is further configured to acquire a path length of each transcribed text, calculate the product of the first probability and the second probability of each transcribed text and the path length of the transcribed text to obtain the score of the transcribed text.

In an embodiment, the score calculation module is further configured to, acquire a preset penalty weighting coefficient, update the path length, by using the preset penalty weight as the power exponent, to obtain the updated path length, calculating the product of the first probability and the second probability of each transcribed text to obtain the score of each transcribed text includes: calculating the product of the first probability and the second probability of each transcribed text and the updated path length of the transcribed text, to obtain the score of the transcribed text.

FIG. 11 is a schematic diagram of the internal structure of a computer device according to an embodiment The computer device may specifically be the terminal 110 (or the server 120) in FIG. 1. As shown in FIG. 11, the computer device is connected with a processor, a memory, a network interface, an input equipment and a display screen through a system bus. The memory includes a non-volatile storage medium and an internal memory. The non-volatile storage medium of the computer device stores an operating system, and also may store a computer program, which, when executed by the processor, enables the processor to implement a method for decoding speech data. A computer program can also be stored in the internal memory, and when the computer program is executed by the processor, it may make the processor to execute the method for decoding speech data. The display screen of the computer device may be a liquid crystal display screen or an electronic ink display screen, and the input equipment of the computer device may be a touch layer covered on the display screen, or a button, a trackball or a touchpad set on the shell of the computer equipment, or it may be an external keyboard, trackpad or mouse, etc.

Those skilled in the art may understand that the structure shown in FIG. 11 is only a block diagram of a partial structure related to the solution of the present application, and does not constitute any limit to the computer device to which the solution of the present application is applied, a specific computer device may include more or fewer components than shown in the figures, or combine certain components, or have a different arrangement of components.

In an embodiment, the apparatus for decoding speech data provided by the present application may be implemented in the form of a computer program, and the computer program may be executed on the computer device as shown in FIG. 11. The memory of the computer device may store various program modules consisting the apparatus for decoding speech data, for example, the transcribed text acquisition module 201, the score acquisition module 202, the hot word acquisition module 203 and the score updating module 204 shown in FIG. 10. The computer program consisting of various program module enables the processor to execute the steps in the method for decoding speech data according to the various embodiments of the present application described in this specification.

For example, the computer device shown in FIG. 11 may perform acquiring at least one transcribed text obtained by transcribing the speech data through the transcribed text acquisition module 201 in the apparatus for decoding speech data shown in FIG. 10. The computer device may perform acquiring score of each transcribed text through the score acquisition module 202. The computer device may perform acquiring at least one preset hot word corresponding to the speech data through the hot word acquisition module 203, where each preset hot word corresponds to a reward value. The computer device may calculate, when there is a string matched with the preset hot word in the transcribed text, a target score of the transcribed text according to the reward value of the matched string and the score of the transcribed text, where the target score is used to determine the decoded text of the speech data through the score updating module 204.

In an embodiment, a computer device is provided, the computer device includes a memory, a processor and a computer program stored on the memory and executable on the processor, the processor is configured to, when executing the computer programs, implement the following steps: acquiring score of each transcribed text; acquiring at least one preset hot word corresponding to the speech data, each preset hot word corresponds to a reward value; and calculating, when there is a string matched with the preset hot word in the transcribed text, a target score of the transcribed text according to the reward value of the matched string and the score of the transcribed text, where the target score is used to determine the decoded text of the speech data.

In an embodiment, calculating, when there is a string matched with the preset hot word in the transcribed text, the target score of the transcribed text according to the reward value of the matched string and the score of the transcribed text includes: calculating the product of the reward value of the matched string and the score of the transcribed text to obtain the target score of the transcribed text.

In an embodiment, when the processor executes the computer program, the following steps are further implemented: intercepting, when current length of the transcribed text is greater than or equal to the length of the preset hot word, a string of the same length as the length of the preset hot word backward from the last character corresponding to the current length of the transcribed text, to obtain a string to be matched; and using, when the string to be matched matches the preset hot word, the string to be matched as the matched string of the transcribed text.

In an embodiment, when the computer program is executed by the processor, the following steps are further implemented: using, when the transcribed text does not contain a preset hot word, the score of the transcribed text as the target score of the transcribed text.

In an embodiment, before acquiring the score of each transcribed text, when the computer program is executed by the processor, the following steps are further implemented: acquiring the probability of each transcription text in the acoustic model, to obtain a first probability; acquiring the probability of each transcribed text in the language model to obtain a second probability; and calculating the product of the first probability and the second probability of each transcribed text to obtain the score of each transcribed text.

In an embodiment, when the computer program is executed by the processor, the following steps are further implemented: acquiring a weighting coefficient of a speech model; updating, by using the weighting coefficient of the speech model as a power exponent, each second probability, to obtain a third probability of each transcribed text; and calculating the product of the first probability and the third probability of each transcribed text to obtain the score of the transcribed text.

In an embodiment, when the computer program is executed by the processor, the following steps are further implemented: acquiring a path length of each transcribed text; and calculating the product of the first probability and the second probability of each transcribed text to obtain the score of each transcribed text includes: calculating the product of the first probability and the second probability of each transcribed text and the path length of the transcribed text to obtain the score of the transcribed text.

In an embodiment, when the computer program is executed by the processor, the following steps are further implemented: acquiring a preset penalty weighting coefficient; updating the path length, by using the preset penalty weight as the power exponent, to obtain the updated path length; and calculating the product of the first probability and the second probability of each transcribed text to obtain the score of each transcribed text includes: calculating the product of the first probability and the second probability of each transcribed text and the updated path length of the transcribed text, to obtain the score of the transcribed text.

In an embodiment, a computer-readable storage medium is provided on which a computer program is stored, the computer program, when executed by a processor, implements the following steps: acquiring at least one transcribed text obtained by transcribing the speech data; acquiring score of each transcribed text; acquiring at least one preset hot word corresponding to the speech data, each preset hot word corresponds to a reward value; and calculating, when there is a string matched with the preset hot word in the transcribed text, a target score of the transcribed text according to the reward value of the matched string and the score of the transcribed text, where the target score is used to determine the decoded text of the speech data.

In an embodiment, when there is a string matched with the preset hot word in the transcribed text, the target score of the transcribed text according to the reward value of the matched string and the score of the transcribed text includes: calculating the product of the reward value of the matched string and the score of the transcribed text to obtain the target score of the transcribed text.

In an embodiment, the computer program, when executed by a processor, further implements the following steps: intercepting, when current length of the transcribed text is greater than or equal to the length of the preset hot word, a string of the same length as the length of the preset hot word backward from the last character corresponding to the current length of the transcribed text, to obtain a string to be matched; and using, when the string to be matched matches the preset hot word, the string to be matched as the matched string of the transcribed text.

In an embodiment, the computer program, when executed by a processor, further implements the following steps: using, when the transcribed text does not contain a preset hot word, the score of the transcribed text as the target score of the transcribed text.

In an embodiment, before acquiring the score of each transcribed text, the computer program, when executed by a processor, further implements the following steps: acquiring the probability of each transcription text in the acoustic model, to obtain a first probability; acquiring the probability of each transcribed text in the language model to obtain a second probability; and calculating the product of the first probability and the second probability of each transcribed text to obtain the score of each transcribed text.

In an embodiment, the computer program, when executed by a processor, further implements the following steps: acquiring a weighting coefficient of a speech model; updating, by using the weighting coefficient of the speech model as a power exponent, each second probability, to obtain a third probability of each transcribed text; and calculating the product of the first probability and the second probability of each transcribed text to obtain the score of each transcribed text comprises: calculating the product of the first probability and the third probability of each transcribed text to obtain the score of the transcribed text.

In an embodiment, the computer program, when executed by a processor, further implements the following steps: acquiring a path length of each transcribed text; and calculating the product of the first probability and the second probability of each transcribed text to obtain the score of each transcribed text comprises: calculating the product of the first probability and the second probability of each transcribed text and the path length of the transcribed text to obtain the score of the transcribed text.

In an embodiment, the computer program, when executed by a processor, further implements the following steps: acquiring a preset penalty weighting coefficient; updating the path length, by using the preset penalty weight as the power exponent, to obtain the updated path length; and calculating the product of the first probability and the second probability of each transcribed text to obtain the score of each transcribed text comprises: calculating the product of the first probability and the second probability of each transcribed text and the updated path length of the transcribed text, to obtain the score of the transcribed text.

Those ordinary skilled in the art can understand that all or part of the processes in the methods of the above embodiments can be implemented by instructing relevant hardware through a computer program, and the program can be stored in a non-volatile computer-readable storage medium, when the program is executed, it may include the processes of the above-mentioned method embodiments. Any reference to memory, storage, database or other medium used in the various embodiments provided in this application may include non-volatile and/or volatile memory. Non-volatile memory may include read-only memory (ROM), programmable ROM (PROM), erasable PROM (EPROM), electrically EPROM (EEPROM) or flash memory. The volatile memory may include random access memory (RAM) or an external cache memory. By way of exemplary but not restrictive description, many forms of RAM are available, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), Rambus direct RAM (RDRAM), direct Rambus dynamic RAM (DRDRAM) and Rambus dynamic RAM (RDRAM).

It should be noted that in this article, relational terms such as "first" and "second" herein are only used to distinguish one entity or operation from another entity or operation, and do not necessarily require or imply that there is any such actual relationship or sequence between entities or operations. Moreover, the terms "include", "comprise" or any other variants thereof are intended to cover non-exclusive inclusion, so that a process, method, item or device including a series of elements not only includes those elements, but also other elements not explicitly listed, or also include elements inherent to this process, method, item or device. Without further restrictions, the element defined by the sentence "including a..." does not exclude the existence of other identical elements in the process, method, item, or device that includes the element.

The above are only specific embodiments of the present application, so that those skilled in the art can understand or implement the present application. Various modifications to these embodiments will be apparent to those skilled in the art, and the general principles defined herein can be implemented in other embodiments without departing from the spirit or scope of the present application. Therefore, the present application will not be limited to these embodiments shown herein, but will conform to the widest range consistent with the principles and novel features applied herein.

## Claims

1. A method for decoding speech data, **characterized in that**, the method comprising:
acquiring at least one transcribed text obtained by transcribing speech data;
acquiring a score of each transcribed text;
acquiring at least one preset hot word corresponding to the speech data, each preset hot word corresponds to a reward value; and
calculating, when there is a string matched with the preset hot word in the transcribed text, a target score of the transcribed text according to the reward value of the matched string and the score of the transcribed text, where the target score is used to determine the decoded text of the speech data.

2. The method according to claim 1, **characterized in that**, calculating, when there is a string matched with the preset hot word in the transcribed text, the target score of the transcribed text according to the reward value of the matched string and the score of the transcribed text comprises:
calculating a product of the reward value of the matched string and the score of the transcribed text to obtain the target score of the transcribed text.

3. The method according to claim 1 or 2, **characterized in that**, the method further comprising:
intercepting, when current length of the transcribed text is greater than or equal to the length of the preset hot word, a string of the same length as the length of the preset hot word backward from the last character corresponding to the current length of the transcribed text, to obtain a string to be matched; and
using, when the string to be matched matches the preset hot word, the string to be matched as the matched string of the transcribed text.

4. The method according to claim 1, **characterized in that**, the method further comprising:
using, when the transcribed text does not contain the preset hot word, the score of the transcribed text as the target score of the transcribed text.

5. The method according to claim 1, **characterized in that**, before acquiring the score of each transcribed text, further comprising:
acquiring a probability of each transcription text in an acoustic model, to obtain a first probability;
acquiring a probability of each transcribed text in a language model, to obtain a second probability; and
calculating a product of the first probability and the second probability of each transcribed text, to obtain the score of each transcribed text.

6. The method according to claim 5, **characterized in that**, the method further comprising:
acquiring a weighting coefficient of a speech model;
updating, by using the weighting coefficient of the speech model as a power exponent, each second probability, to obtain a third probability of each transcribed text; and
calculating the product of the first probability and the second probability of each transcribed text to obtain the score of each transcribed text comprises: calculating a product of the first probability and the third probability of each transcribed text to obtain the score of the transcribed text.

7. The method according to claim 5 or 6, **characterized in that**, the method further comprising:
acquiring a path length of each transcribed text; and
calculating the product of the first probability and the second probability of each transcribed text to obtain the score of each transcribed text comprises: calculating the product of the first probability, the second probability of each transcribed text and the path length of the transcribed text to obtain the score of the transcribed text.

8. The method according to claim 7, **characterized in that**, the method further comprising:
acquiring a preset penalty weighting coefficient;
updating the path length, by using the preset penalty weight as a power exponent, to obtain an updated path length; and
calculating the product of the first probability, the second probability of each transcribed text and the path length of the transcribed text to obtain the score of the transcribed text comprises: calculating the product of the first probability, the second probability of each transcribed text and the updated path length of the transcribed text, to obtain the score of the transcribed text.

9. An apparatus for decoding speech data, **characterized in that**, the apparatus comprising:
a transcribed text acquisition module, configured to acquire at least one transcribed text obtained by transcribing speech data;
a score acquisition module, configured to acquire a score of each transcribed text;
a hot word acquisition module, configured to acquire at least one preset hot word corresponding to the speech data, each preset hot word corresponds to a reward value; and
a score updating module, configured to calculate, when there is a string matched with the preset hot word in the transcribed text, a target score of the transcribed text according to the reward value of the matched string and the score of the transcribed text, where the target score is used to determine the decoded text of the speech data.

10. A computer device, comprising a memory, a processor and a computer program stored on the memory and executable on the processor, **characterized in that**, the processor is configured to implement, when executing the computer programs, the method according to any one of claims 1 to 8.

11. A computer-readable storage medium on which a computer program is stored, **characterized in that**, the computer program, when executed by a processor, implements the steps of the method according to any one of claims 1 to 8.
